# EUROPEAN PATENT SPECIFICATION

(11) **EP 3 764 494 B1**
(45) Date of publication and mention of the grant of the patent: **02.11.2022**
(21) Application number: 19382582.5
(22) Date of filing: 09.07.2019
(51) Int. Cl.: H02G 3/38, H01R 25/16, H02G 3/12, H01R 25/14, A47B 21/06, F16L 3/10, F16L 3/24, H02B 1/052, H01R 25/00, H02G 3/04, H02G 3/10

(54) **DEVICE FOR ATTACHING AN ELECTRICAL POWER AND/OR DATA SUPPLY ASSEMBLY ON A RAIL.**
VORRICHTUNG ZUR BEFESTIGUNG EINER ELEKTRISCHEN STROM- UND/ODER DATENVERSORGUNGSANORDNUNG AUF EINER SCHIENE.
DISPOSITIF DE FIXATION SUR RAIL D'UN ENSEMBLE D'ALIMENTATION DE PUISSANCE ÉLECTRIQUE ET/OU DE DONNÉES.

(43) Date of publication of application: 13.01.2021
(73) Proprietor: Schneider Electric España, S.A., 08019 Barcelona (ES)
(72) Inventor: REBOLÉ OLLETA, JOSE ANTONIO, 31100 PUENTE LA REINA (NAVARRA) (ES); DELOY, JONATHAN DAMIEN, 38320 Eybens (Isere) (FR); DENISE TROCIN, MAEVA MICHELE, 31100 PUENTE LA REINA (NAVARRA) (ES); IBARRA ROMERO, PEIO, 31100 PUENTE LA REINA (NAVARRA) (ES)
(74) Representative: Plasseraud IP

(56) References cited:
- EP-A2- 1 189 320
- EP-B1- 1 189 320
- DE-A1- 4 103 957
- FR-A1- 2 610 768
- US-A1- 2007 137 797
- US-A1- 2012 049 024
- US-A1- 2014 295 691

## Description

### Field of the Art

The present invention relates to the industry dedicated to electric power and/or data supply assemblies for arrangement on raceways.

### State of the Art

Units configured by way of connection panels to provide one or more electrical and/or data connections are widely known today, said units being arranged according to fixed locations in walls, floors, or tables, for example.

Today, the use of electronic devices which require power and/or data supply grows incessantly and existing units tend to fall short in terms of powering/feeding the electronic devices which may even be concentrated in a specific location.

Additionally, the mentioned devices currently provide great flexibility in terms of moving same, mainly as a result of their increasingly lower weight and/or volume. In addition to having to provide capacity in terms of increasing the number of electrical and/or data connections, this flexibility also entails the need to provide capacity in terms of establishing said connections according to the variable usage location of said devices.

Conventionally, the solution used is the fixed arrangement of strips, which can also be referred to as multiple electrical and/or electronic elements, in portable raceways. Therefore, said solution provides a degree of flexibility so that the devices serve as the corresponding electrical and/or data connections to be powered/fed when a user is on the move.

However, this solution results in an anchored, i.e., fixed, arrangement of said units which prevents, or at least greatly hinders, adapting their placement to personally suit different users. Furthermore, this solution does not favor replacing these multiple electrical and/or electronic elements or the like.

In view of the described drawbacks or limitations of the solutions existing today, a solution which provides ease, simplicity, and flexibility for arranging said units, such that they are held in a secure manner and such that they can likewise be removed, is required.

Examples of prior art can be found for instance in DE 4103957 A1 disclosing a cable installation channel; FR 2610768 A1 disclosing a multi-function rapid fastening and unfastening device for a multi-socket terminal strip; US 2014/295691 A1 disclosing a mounted electrical receptacle; EP 1189320 A2 disclosing a holder for attaching to a rail; US 2012/049024 A1 disclosing a wall quick mounting device; or in US 2007/137797 A1 disclosing an upright post with mounting collar.

### Object of the Invention

For the purpose of achieving this objective and solving the technical problems discussed up until now, besides providing additional advantages which can be derived below, the present invention provides an electric power and/or data supply assembly for the arrangement of modular units on raceways, said assembly comprising a fixing element configured for arranging the modular unit such that it is attached to the raceway; contact surfaces for the fixing element to establish contact with the raceway; and a receiving portion configured for arranging the modular unit such that it is coupled in the fixing element.

The present electric power and/or data supply assembly additionally comprises at least one raised element for interlocking in the raceway, the at least one raised element being arranged in projection in correspondence with one of the contact surfaces. Therefore, a position of the modular unit on the raceway can be fixed by means of the fixing element.

The fixing element may comprise a body and two flanges, such that the receiving portion is located in the body and one of the contact surfaces is located in each of the two flanges.

The contact surfaces are divided into two portions, each of the portions having one of the raised elements.

According to the claimed invention, the two portions form a single part, the two portions being separated from one another by a channel which is configured such that it has a reducible width, it being possible to apply pressure on the raceway through the contact surfaces.

According to an alternative option which is not according to the invention but presented for illustration purposes only, , each of the two portions forms an independent part. According to this, the two portions preferably have a protrusion and a receiving hole, the protrusion of one of the two portions being introducible in the receiving hole of the other one of the two portions such that a relative position between the two portions can be fixed.

The receiving portion may be jointly defined by the two portions. Additionally or alternatively, the receiving portion comprises at least one prominence configured for being arranged fitted in the modular unit.

The electric power and/or data supply assembly additionally comprises pressure-applying means, the fixing element being configured such that with the pressure-applying means threaded through the fixing element by means of the contact surfaces compression on the raceway can be established.

The electric power and/or data supply assembly may additionally comprise coupling areas in the fixing element and a cover with two opposing longitudinal ends, the cover being able to be arranged coupled in the coupling areas by means of elastic engagement.

The cover may have an open longitudinal end and a covered longitudinal end, the open longitudinal end being configured for being coupled to the modular unit. Alternatively, the cover has two open longitudinal ends, the two open longitudinal ends being configured for being coupled to one of the modular units.

The electric power and/or data supply assembly may additionally comprise at least one notch and one tooth, the tooth being able to be arranged at least partially fitted or housed in said notch to establish at least one pre-attachment between the cover and the modular unit.

The electric power and/or data supply assembly may additionally comprise at least one protuberance and one cavity, the protuberance and the cavities being complementary to one another for establishing an attachment between the fixing element and the cover by means of elastic engagement.

The electric power and/or data supply assembly may additionally comprise at least one recess and one rib, the rib being able to be housed such that it is fitted in the recess to establish a coupling between the fixing element and the cover by means of elastic engagement.

### Description of the Drawings

Figure 1 shows an exploded schematic view of two fixing elements and a modular unit comprised in an electric power and/or data supply assembly for arrangement in raceways object of the invention, according to a preferred embodiment.
Figure 2 shows a schematic perspective view of the fixing elements assembled and coupled to the modular unit as well as the raceway.
Figure 3 shows an exploded schematic view of the fixing element object of the invention, according to the preferred embodiment, according to two options.
Figure 4 shows a schematic view of the fixing element of Figure 3 assembled, according to the two options.
Figure 5 shows an exploded schematic view of two fixing elements and two modular units comprised in the electric power and/or data supply assembly for arrangement in raceways, according to a second embodiment.
Figure 6 shows a schematic perspective view of the fixing elements assembled and coupled to the modular units, as well as to the raceway, according to the second embodiment.
Figure 7 shows an exploded schematic view of the fixing element object of the invention, according to the second serving as an example for better understanding the invention.
Figure 8 shows a schematic view of the fixing element of Figure 7 assembled.
Figure 9 shows another schematic perspective view of two of the fixing elements coupled to the modular unit, as well as to the raceway, according to the preferred embodiment, according to one of the two options.
Figure 10 shows another schematic perspective view of two of the fixing elements coupled to two of the modular units, as well as to the raceway, according to the second embodiment.

Only the first option of the first (preferred) embodiment is according to the claimed invention.

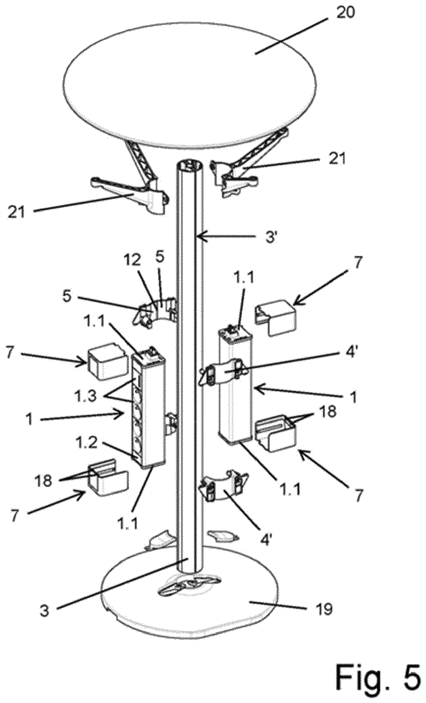

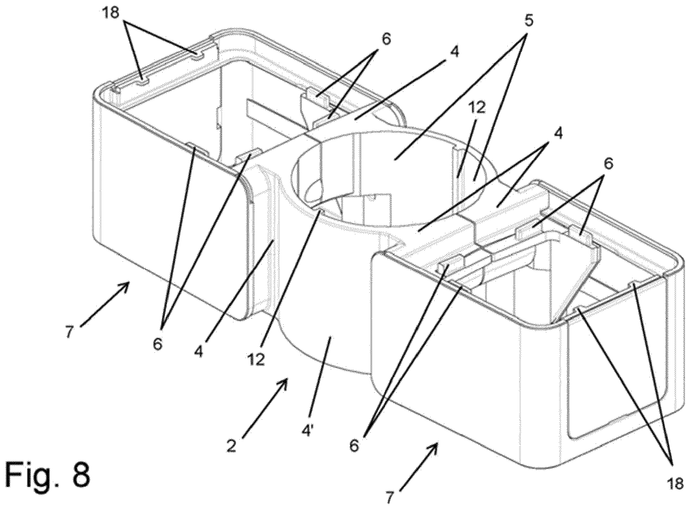

The second embodiment (Figs. 5-8 and 10), also referred to as "second preferred embodiment" or "another embodiment" as well as the second option are not according to the invention and are present for illustration purposes only.

### Detailed Description of the Invention

The present invention relates to an electric power and/or data supply assembly, which comprises at least one fixing element (2). Preferably, the supply assembly additionally comprises a modular unit (1), in addition to a raceway (3). The fixing element (2) is configured for arranging the modular unit (1) such that it is held or supported on the raceway (3).

The fixing element (2) is configured by way of a clamp or an enclosure completely or partially surrounding the raceway (3) for arranging the fixing element. Preferably, each of the modular units (1) is supported on the corresponding raceway (3) by means of two fixing elements (2). According to this, each of the two mentioned fixing elements (2) supports the corresponding modular unit (1) through the extremities thereof. Likewise, the modular units (1) have a lid (1.1) in correspondence with each of said extremities of each of the modular units (1).

Each of the modular units (1) has at least one component (1.2) that can be powered/fed by means of electric power and/or data, such that it provides at least one electrical and/or data connection. The modular units (1) and the components (1.2) are jointly configured for being arranged such that said components (1.2) are coupled in the modular units (1), preferably by clipping or elastic engagement.

Some of the components (1.2) that can be selected, in an individual manner or in an interchangeably combined manner, are electric sockets, type A or type C USB ports, WiFi signal repeaters, HDMI connectors, RJ45 connectors, boxes with at least one differential switch, wireless chargers, microphones and/or loudspeakers, lamps, etc.

The modular unit (1) may have one or more complementary elements (1.3) to be arranged such that one face of said modular unit (1) is covered, together with the component or components (1.2) coupled therein.

The fixing element (2) comprises a body (4), in addition to two flanges (4') for externally surrounding, at least partially, the corresponding raceway (3). According to this, the present electric power and/or data supply assembly comprises contact surfaces (5) for the fixing element (2) to establish contact on the corresponding raceway (3).

Specifically, the present assembly comprises one of the contact surfaces (5) in correspondence with each of the flanges (4'). Preferably, the contact surfaces (5) have dimensions and a geometry for maximizing contact with the corresponding raceway (3). The contact surfaces (5) are divided into two portions.

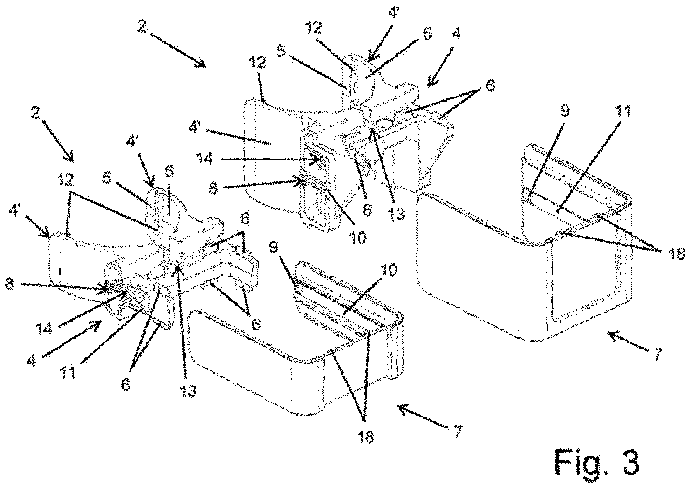

According to a first preferred embodiment which is shown according to two options in Figure 3, for example, the two portions constitute or form a single part, each of the portions corresponding with one of the flanges (4'). Likewise, the fixing element (2) comprises two flanges (4'), each of these flanges (4') extending from the body (4) such that each of them partially surrounds an outer perimeter of the raceway (3) on which they are arranged.

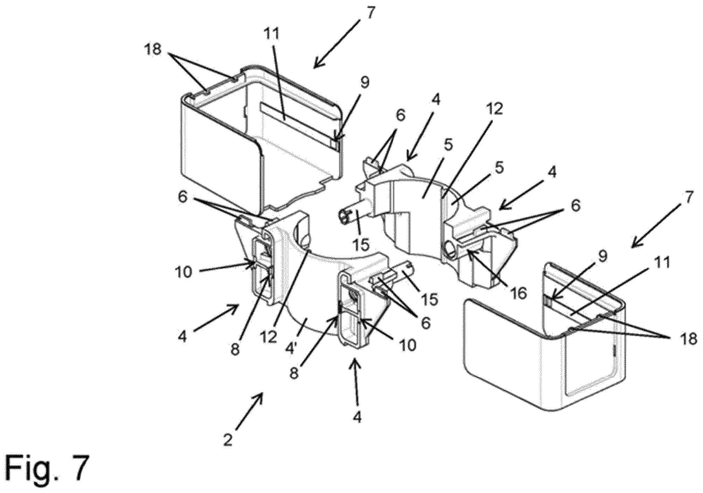

According to a second preferred embodiment which is shown according to one of the two possible options in Figure 7, for example, each of the two portions constitutes or forms an independent part, each of the portions corresponding with one of the flanges (4'). Likewise, the body (4) is partially located half in one of the independent parts and half in the other one of the independent parts. According to this, the body (4), i.e., each half thereof, is additionally formed by two divisions according to each of the two independent parts, and the divisions of each of said independent parts are likewise attached to one another by means of the corresponding flange (4').

The present fixing element (2) comprises at least one receiving portion, the at least one receiving portion being configured for being arranged such that it is coupled to the corresponding modular unit (1). Preferably, the corresponding receiving portions comprise one prominence or a plurality of prominences (6) configured for establishing a removable attachment with respect to the modular unit (1).

Preferably, the prominences (6) have dimensions and a geometry for being arranged such that they are press-fitted in complementary holes (6') of the corresponding modular unit (1). More specifically, said complementary holes (6') are located on the lids (1.1) of the modular unit (1) for closing or covering its extremities.

According to the first of the two options corresponding to the first preferred embodiment, there is one receiving portion defined in the single part. Therefore, according to the first of said options, the fixing element (2) can be arranged in one of the raceways (3) coupled to one of the modular units (1) .

According to the second of the two options corresponding to the first preferred embodiment, there are two receiving portions defined in the single part, arranged opposite one another according to the opposing sides of the fixing element (2), and more specifically of the body (4). Therefore, according to the second of said options, the fixing element (2) can be arranged in one of the raceways (3) simultaneously coupled to two of the modular units (1), being aligned with one another according to an imaginary central longitudinal axis thereof, each of these units (1) according to one of said opposing sides.

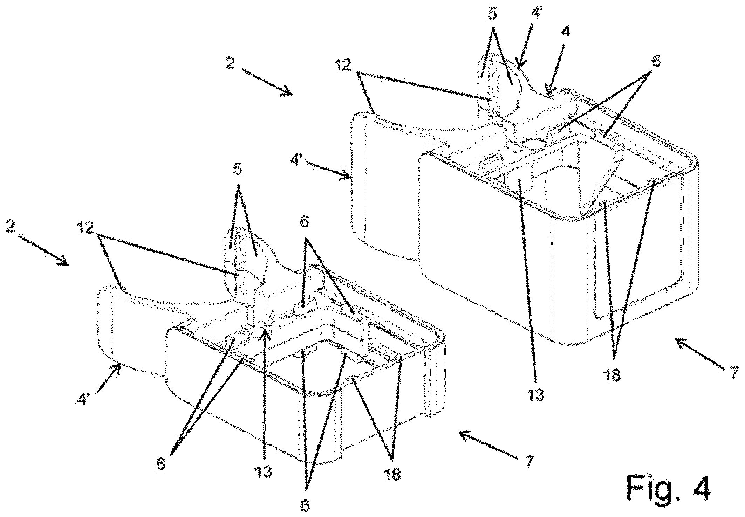

Therefore, according to the first preferred embodiment the fixing element (2) has each of the receiving portions defined by the single part. See the arrangements of the prominences (6) in Figures 3 and 4.

According to the first of the two options corresponding to the second preferred embodiment, there are two receiving portions, each being jointly defined in the two independent parts. In other words, there are two receiving portions, each of these receiving portions being determined in correspondence with two of the divisions of the body (4), each of these divisions being located in one of the two independent parts.

Therefore, according to said first option the fixing element (2) can be arranged in one of the raceways (3) coupled to two of the modular units (1), arranged parallel to or laterally facing one another, each of said units (1) according to the same side of the fixing element (2).

According to the second of the two options corresponding to the second preferred embodiment not shown in the drawings, there are four receiving portions jointly defined by the two independent parts, with two portions being arranged opposite the other two portions, according to the two opposing sides of the fixing element (2), and more specifically the body (4).

Therefore, according to the second of said options the corresponding fixing element (2) can be arranged in one of the raceways (3) coupled to four of the modular units (1), more specifically with two modular units being aligned with another two, as well as with two modular units being parallel to another two. This second of said two options corresponding to the second preferred embodiment can be defined as a result of an adaptation of the second of the two options corresponding to the first preferred embodiment to the second preferred embodiment.

Therefore, according to the second preferred embodiment the fixing element (2) has each of the receiving portions defined by the two independent parts.

The present power supply assembly comprises one or two covers (7) for each of the fixing element (2). The covers (7) have two opposing longitudinal ends, such that at least one of the longitudinal ends is arranged according to one of the opposite sides of the fixing elements (2), the covers (7) being coupled in said fixing elements (2).

According to this, the power supply assembly comprises coupling areas in the fixing elements (2) for arranging the covers (7) coupled thereto. Likewise, said assembly comprises coupling means for establishing a relative position of the cover (7) in the body (4) thereof according to the coupling areas. These coupling means comprise one or more protuberances (8) and a cavity (9) for each of the protuberances (8), the protuberances (8) and the cavities (9) being complementary to one another such that they jointly determine a fitting attachment. According to this, the fixing element (2) and the cover (7) are configured for establishing this attachment with one another by means of clipping or elastic engagement, such that it can be established and removed in a quick and simple manner.

According to this and according to the first preferred embodiment, the coupling areas are located in correspondence with the body (4), and more specifically with opposing sides of said body (4). According to the second preferred embodiment, each of the coupling areas is located in correspondence with one of the divisions of the body (4).

Likewise, the protuberances (8) are preferably located in the coupling areas and the corresponding and complementary cavities (9) are preferably located in the covers (7); alternatively, however, the protuberances (8) can be located in the covers (7) and the corresponding and complementary cavities (9) in the coupling areas.

According to the first option of the first preferred embodiment and the first option of the second preferred embodiment, one of the longitudinal ends of the corresponding cover (7) is open for receiving the corresponding modular unit (1) such that it is coupled thereto and the other one of the longitudinal ends of said cover (7) is covered or closed to conceal the extremity of the corresponding modular unit (1) arranged coupled thereto.

According to the second option of the first preferred embodiment and the second option of the second preferred embodiment, the two longitudinal ends of the corresponding cover (7) are open for receiving the corresponding modular units (1) such that they are coupled thereto.

The coupling means additionally comprise a recess (10) and a rib (11), the rib (11) being able to be housed such that it is fitted in the recess (10). The recesses (10) and the ribs (11) have an elongated configuration to establish coupling between the fixing element (2) and the cover (7), this coupling thereby securing a position relative to one another. According to this, the fixing element (2) and the cover (7) are configured for establishing this coupling with one another by means of clipping or elastic engagement, such that it can be established and removed in a quick and simple manner.

The recesses (10) and the ribs (11), in combination with the protuberances (8) and the cavities (9), provide stable positioning and seating of the covers (7) in the coupling areas of the fixing elements (2), and more specifically in the coupling areas located in the bodies (4) of said fixing elements (2) .

Preferably, the recesses (10) are located in the coupling areas and the ribs (11) in the covers (7), according to the first option of both the first preferred embodiment and the second preferred embodiment. See Figures 3 and 7. Alternatively, the ribs (11) are located in the coupling areas and the recesses (10) in the covers (7), according to said first options of both the first preferred embodiment and the second preferred embodiment.

Preferably, the ribs (11) are located in the coupling areas and the recesses (10) in the covers (7), according to the second option of both the first preferred embodiment and the second preferred embodiment. See Figure 3. Alternatively, the recesses (10) are located in the coupling areas and the ribs (11) in the covers (7), according to said second option of both the first preferred embodiment and the second preferred embodiment.

The present power supply assembly comprises at least one raised element (12) for fixing a position between the corresponding fixing element (2) and raceway (3). The raised element (12) is in projection in correspondence with the corresponding contact surface (5) such that it can be arranged interlocked in the raceway (3). Preferably, the raised elements (12) have dimensions and a geometry for being arranged such that they are fitted in receiving areas (3'), such as grooves or holes, of the corresponding raceway (3).

According the invention, there are two raised elements (12) comprised in the fixing element (2). According to this, both when the contact surface (5) is divided into the two portions according to the two independent parts and when said contact surface (5) is divided into the two portions according to the single part, each of the portions has one of the raised elements (12) . According to this, each of the flanges (4') has arranged thereon one of the raised elements (12). Likewise, the two raised elements (12) are preferably arranged such that they are facing one another at least when the fixing element (2) is fixed in the corresponding raceway (3).

The fixing element (2), and therefore also the modular unit (1) supported by this fixing element (2), are therefore at least prevented from being rotated on said raceway (3), according to the interlocked arrangement of the raised elements (12) in the raceway (3), optionally in the receiving areas (3').

Additionally, the fixing element (2), and therefore also the corresponding modular unit (1), are also prevented from being moved along said raceway (3), according to the interlocked arrangement of the raised elements (12) in the raceway (3), optionally in the receiving areas (3'), in addition to the contact between the contact surfaces (5) and the raceway (3).

According to the first preferred embodiment, the two portions and the two flanges (4') are separated from one another by means of a channel (13) comprised in the fixing element (2) in correspondence with the body (4). Likewise, the fixing element (2) comprises a through hole (14) in the body (4), extending along the two portions according to two segments. One end of each of the two segments is located in correspondence with the channel (13), and more specifically with side walls of the channel (13).

The present power supply assembly comprises pressure-applying means to exert on the raised elements (12) a propensity to move closer to one another. The raised elements (12) moving closer to one another entails a reduction of a width of the channel (13), i.e., of a gap between the mentioned side walls of the channel (13).

According to this, the pressure-applying means can be arranged through the through hole (14), and more specifically through the two segments. The pressure-applying means in turn comprise a threaded shaft. Therefore, at least one of the segments of the through hole (14) has a thread complementary to the thread of the threaded shaft. Thus by means of screwing the pressure-applying means into the fixing element (2) in correspondence with the through hole (14), going through the channel (13) laterally, pressure can be applied on the corresponding raceway (3) by means of the two flanges (4'), or in other words, compression can be applied on the corresponding raceway (3) by means of the contact surfaces (5), for arrangement of the fixing element (2) such that it is prevented from being rotated on said raceway (3), and preferably also prevented from being moved along said raceway (3).

Therefore, the arrangement of the channel (13) provides a simple and quick placement of the fixing element (2) on the corresponding raceway (3) by providing elasticity such that the flanges (4') can move away from one another for the purpose of arranging the raceway (3) between same, while the through hole (14) according to the two segments through said channel (13) provides, at the same time, a quick and simple removable fixing of the fixing element (2) on the corresponding raceway (3) by providing elasticity such that the flanges (4') can move closer to one another for the purpose of applying pressure on the raceway (3) arranged between same.

According to the second preferred embodiment, the fixing element (2) comprises, according to each of the two portions and the two independent parts, a protrusion (15) and a receiving hole (16), the protrusion (15) of one of the two portions or independent parts being introducible in the receiving hole (16) of the other one of the two portions or independent parts. According to this, the two independent parts are preferably identical.

According to said second preferred embodiment, like the first preferred embodiment, the present power supply assembly comprises pressure-applying means to exert on the raised elements (12) the propensity to move closer to one another. The raised elements (12) moving closer to one another entails a reduction of a gap between the two independent parts, and more specifically of the flanges (4').

According to this, the pressure-applying means can be arranged through the protrusion (15) and the receiving hole (16). The pressure-applying means in turn comprise two threaded shafts. Therefore, the protrusion (15) and/or the receiving hole (16) of each of the independent parts have a thread complementary to the thread of the corresponding threaded shaft. Therefore, by means of screwing the pressure-applying means into the fixing element (2) arranged in correspondence with the protrusion (15) and the receiving hole (16), pressure can be applied on the corresponding raceway (3) by means of the two flanges (4'), or in other words, compression can be applied on the corresponding raceway (3) by means of the contact surfaces (5), for arrangement of the fixing element (2) such that it is prevented from being rotated on said raceway (3), and preferably also prevented from being moved along said raceway (3).

Therefore, the arrangement of the portions according to the two independent parts provides a simple and quick placement of the fixing element (2) on the corresponding raceway (3), while the protrusions (15) and the receiving holes (16) provide, at the same time, a quick and simple removable fixing of the fixing element (2) on the corresponding raceway (3).

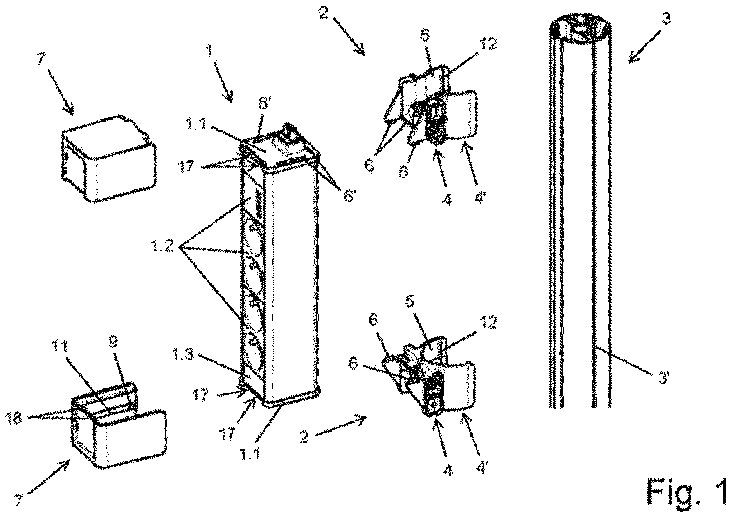

In order to establish an attachment between the covers (7) and the modular units (1), and more specifically between said covers (7) and the lids (1.1), the present power supply assembly comprises at least one notch (17) and one tooth (18), the tooth (18) being able to be arranged such that it is fitted or housed in said notch (17). Preferably, there are two teeth (18) and notches (17) for establishing the pre-attachment between the lids (1.1) and the covers (7). Additionally or alternatively, the teeth (18) are preferably located in the covers (7) and the notches (17) in the lids (1.1), as can be seen in Figure 1.

More specifically, the teeth (18) are in correspondence with the open longitudinal ends of the covers (7), extending from an upper face intended for being located farthest from the fixing element (2) to which they are coupled and towards a lower face which can be defined opposite the upper face.

The notches (17) are in turn arranged in correspondence with an upper side or edge of the lids (1.1). This upper side or edge is opposite the lower side or edge, the lower side or edge being that intended to be located facing the corresponding raceway (3). Therefore, the notches (17) are readily accessible for the fitted arrangement of the teeth (18).

The mentioned attachment between the covers (7) and the modular units (1) is established by means of perpendicular movement thereof according to the imaginary central longitudinal axis of the modular units (1). According to this, the ribs (11) are moved along the corresponding recesses (11) until the teeth (18) are arranged in the notches (17) and the protuberances (8) in the cavities (9).

This configuration makes it very easy and comfortable for attaching the covers (7) and the lids (1.1) to one another, and it is particularly relevant for placement of the corresponding modular unit (1) in smaller openings or spaces. Furthermore, the complete attachment between the covers (7) and the lids (1.1) takes place, such that said lids (1.1) are arranged in a space that can be defined by the covers (7) themselves; i.e., with the lids (1.1) closing the extremities of the modular units (1), these extremities are concealed by the corresponding covers (7) coupled on said lids (1.1).

Alternatively, the teeth (18) are located in the lids (1.1) and the notches (17) in the covers (7), in line with what has been described for the preferred option.

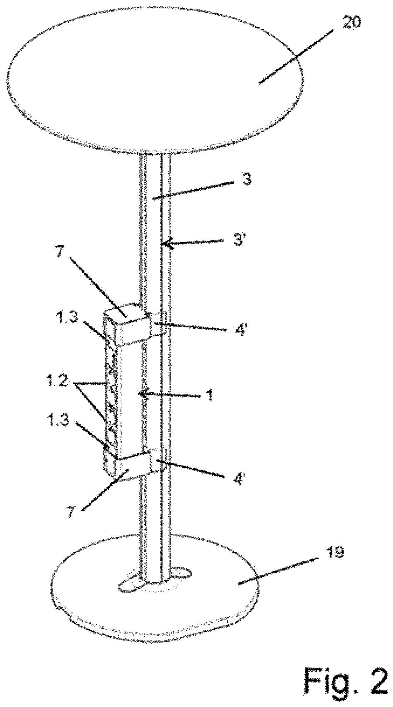

According to different embodiments, the present electric power and/or data supply assembly can be arranged on the corresponding raceway (3), said raceway (3) being part of a table, as can be seen in Figure 2. This Figure 2 shows one of the modular units (1) supported on the mentioned raceway (3) by two of the fixing elements (2) according to the extremities thereof, said raceway (3) having at one end a base (19) for resting on a surface or ground, with the raceway (3) being kept perpendicular or substantially perpendicular to said surface, and at the other end a board (20) for holding objects such as, for example, mobile telephones, computers, and the like. The attachments between the fixing elements (2) and the modular unit (1) are concealed by the corresponding covers (7), which are two in number in this case.

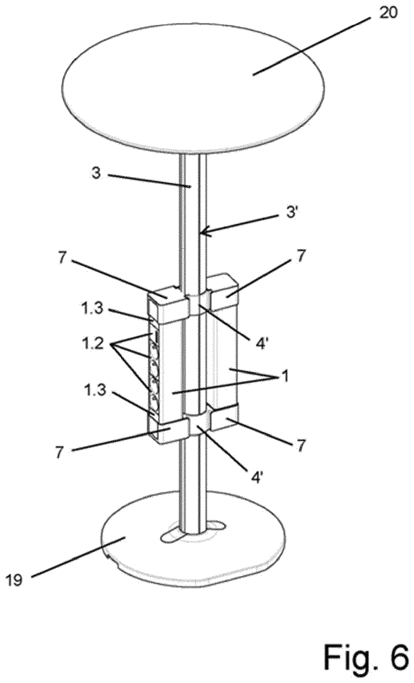

For this, like in the example shown in Figure 6, the corresponding raceway (3) has a support (21) configured in two portions to be arranged such that it is immobilized on said raceway (3) by pressure and at the same time fixed to the board (20), preferably by means of screws or the like. This support (21) can be seen in Figure 5.

Figure 6 shows two of the modular units (1) supported on the mentioned raceway (3) by two of the fixing elements (2) according to the extremities thereof, said raceway (3) having base (19) at one of the ends and board (20) at the other end. The attachments between the fixing elements (2) and the modular units (1) are concealed by the corresponding covers (7), which are four in number in this case.

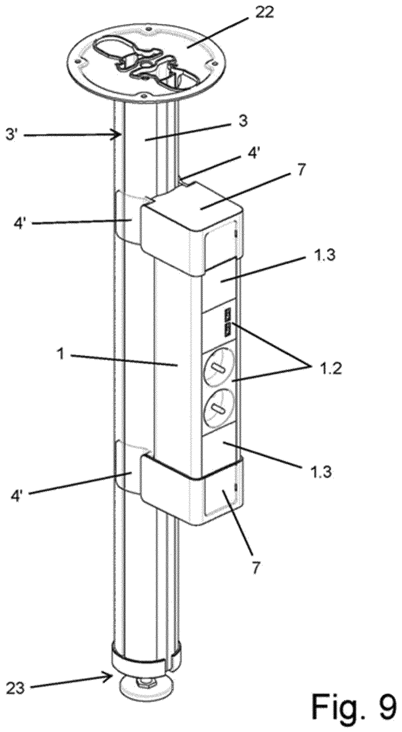

Figure 9 shows another embodiment in which one of the modular units (1) is supported on the mentioned raceway (3) by two of the fixing elements (2) according to the extremities thereof, said raceway (3) having at one end a coupling element (22) for being coupled to a board such that the raceway (3) additionally acts like a table leg, for example, and at the other end a supporting element (23) for resting on a surface or ground. The attachments between the fixing elements (2) and the modular unit (1) are concealed by the corresponding covers (7), which are two in number in this case.

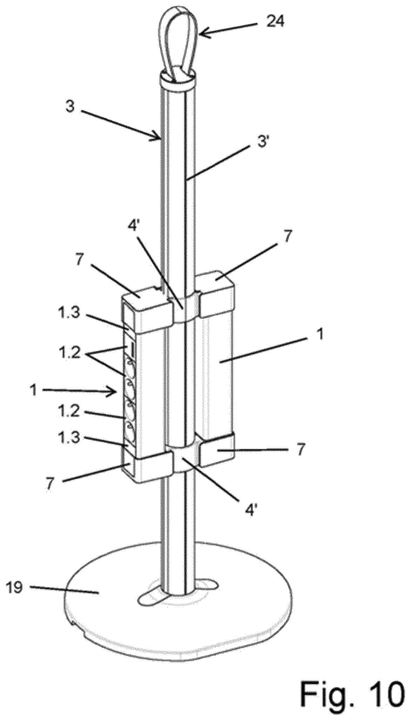

Figure 10 shows another additional embodiment in which the raceway (3) has, instead of the coupling element (22), a handle (24) for gripping same such that the raceway (3) is portable. Likewise, the raceway (3) has base (19) at the other end, instead of the support element (23). In this embodiment, two of the modular units (1) are supported on the mentioned raceway (3) by two of the fixing elements (2) according to the extremities thereof, said raceway (3) having base (19) at one of the ends and handle (24) at the other end. The attachments between the fixing elements (2) and the modular units (1) are concealed by the corresponding covers (7), which are four in number in this case.

According to the present invention, the raceway (3) has, without distinction, base (19) or support element (23) at one of its ends, as occurs with the coupling element (22), the handle (24), and the board (20). According to any one of the possible combinations, the present electric power and/or data supply assembly comprises one, two, three, four, or more modular units (1), each of them having in correspondence with the extremities one of the fixing elements (2), with the attachments between the fixing elements (2) and the modular units (1) preferably being concealed by the corresponding covers (7).

## Claims

1. An electric power and/or data supply assembly for the arrangement of modular units (1) on raceways (3), comprising:
- a fixing element (2) configured for arranging the modular unit (1) such that it is attached to the raceway (3);
- two contact surfaces (5) for the fixing element (2) to establish contact on the raceway (3);
- a receiving portion configured for arranging the modular unit (1) such that it is coupled in the fixing element (2) ;
- two raised elements (12) for interlocking in the raceway (3), the raised elements (12) being arranged in projection in correspondence with each of the contact surfaces (5);
such that a position of the modular unit (1) on the raceway (3) can be fixed by means of the fixing element (2);
the fixing element (2) comprising two portions, each of the portions having one of the contact surfaces (5) and one of the raised elements (12), and wherein the two portions form a single part, the two portions are separated from one another by a channel (13) which is configured such that it has a reducible width, so it is possible to apply pressure on the raceway (3) through the contact surfaces (5);
wherein said supply assembly further comprises pressure-applying means in the form of a threaded shaft and a corresponding through hole (14) extending along the two portions, said through hole (14) having a thread complementary to the thread of the threaded shaft, and said through hole (14) passing through the channel (13) laterally, such that when the threaded shaft is threaded in the through hole (14), the width of the channel (13) is configured to reduce, which moves the two portions, the contact surfaces (5) and the raised elements (12) closer to one another, establishing compression on the raceway (3).

2. The supply assembly according to claim 1, wherein the fixing element (2) comprises a body (4) and the two portions are in the form of two flanges (4'), such that the receiving portion is located in the body (4) and each of the contact surfaces (5) is located in corresponding one of the two flanges (4').

3. The supply assembly according to claim 1 or 2, wherein the receiving portion is jointly defined by the two portions.

4. The supply assembly according to any one of claims 1 to 3, wherein the receiving portion comprises at least one prominence (6) configured for being arranged fitted in the modular unit (1).

5. The supply assembly according to any one of claims 1 to 4, wherein it additionally comprises coupling areas in the fixing element (2) and a cover (7) with two opposing longitudinal ends, the cover (7) being able to be arranged coupled in the coupling areas by means of elastic engagement.

6. The supply assembly according to claim 5, wherein the cover (7) has an open longitudinal end and a covered longitudinal end, the open longitudinal end being configured for being coupled to the modular unit (1).

7. The supply assembly according to claim 5, wherein the cover (7) has two open longitudinal ends, the two open longitudinal ends being configured for being coupled to one of the modular units (1).

8. The supply assembly according to any one of claims 5 to 7, wherein it additionally comprises at least one notch (17) and one tooth (18), the tooth (18) being able to be arranged at least partially housed in said notch (17) to establish at least a pre-attachment between the cover (7) and the modular unit (1) .

9. The supply assembly according to any one of claims 5 to 8, wherein it additionally comprises at least one protuberance (8) and one cavity (9), the protuberance (8) and the cavities (9) being complementary to one another for establishing an attachment between the fixing element (2) and the cover (7) by means of elastic engagement.

10. The supply assembly according to any one of claims 5 to 9, wherein it additionally comprises at least one recess (10) and one rib (11), the rib (11) being able to be housed such that it is fitted in the recess (10) to establish a coupling between the fixing element (2) and the cover (7) by means of elastic engagement.

## Patentansprüche

1. Elektrische Strom- und/oder Datenversorgungsanordnung für die Anordnung modularer Einheiten (1) auf Kabelkanälen (3), die aufweist:
- ein Befestigungselement (2), das konfiguriert ist, um die modulare Einheit (1) derart anzuordnen, dass sie an dem Kabelkanal (3) befestigt wird;
- zwei Kontaktoberflächen (5) für das Befestigungselement (2), um den Kontakt auf dem Kabelkanal (3) herzustellen;
- einen Aufnahmeabschnitt, der konfiguriert ist, um die modulare Einheit (1) derart anzuordnen, dass sie in dem Befestigungselement (1) gekoppelt wird;
- zwei erhöhte Elemente (12) zum Ineinandergreifen mit dem Kabelkanal (3), wobei die erhöhten Elemente (12) entsprechend jeder der Kontaktoberflächen (5) in Projektion angeordnet sind;
so dass eine Position der modularen Einheit (1) auf dem Kabelkanal (3) mittels des Befestigungselements (2) fixiert werden kann;
wobei das Befestigungselement (2) zwei Abschnitte aufweist, wobei jeder der Abschnitte eine der Kontaktoberflächen (5) und eines der erhöhten Elemente (12) hat, und wobei die zwei Abschnitte einen einzelnen Teil bilden, wobei die zwei Abschnitte durch einen Kanal (13) voneinander getrennt sind, der derart konfiguriert ist, dass er eine verkleinerbare Breite hat, so dass es möglich ist, durch die Kontaktoberflächen (5) Druck auf den Kabelkanal (3) anzuwenden; wobei
die Versorgungsanordnung ferner Druckanwendungseinrichtungen in der Form eines Gewindeschafts und eines entsprechenden Durchgangslochs (14), das sich entlang der zwei Abschnitte erstreckt, aufweist, wobei das Durchgangsloch (14) ein zu dem Gewinde des Gewindeschafts komplementäres Gewinde hat, und wobei das Durchgangsloch (14) seitlich durch den Kanal (13) geht, so dass die Breite des Kanals (13) derart konfiguriert wird, dass sie verkleinert wird, wenn der Gewindeschaft in das Durchgangsloch (14) geschraubt wird, was die zwei Abschnitte, die Kontaktoberflächen (5) und die erhöhten Elemente (12) näher zueinander bewegt, wodurch eine Komprimierung auf dem Kabelkanal (3) hergestellt wird.

2. Versorgungsanordnung nach Anspruch 1, wobei das Befestigungselement (2) einen Körper (4) aufweist, und die zwei Abschnitte die Form von zwei Flanschen (4') haben, so dass der Aufnahmeabschnitt in dem Körper (4) angeordnet ist und jede der Kontaktoberflächen (5) in einem entsprechenden der zwei Flansche (4') angeordnet ist.

3. Versorgungsanordnung nach Anspruch 1 oder 2, wobei der Aufnahmeabschnitt durch die zwei Abschnitte gemeinsam definiert wird.

4. Versorgungsanordnung nach einem der Ansprüche 1 bis 3, wobei der Aufnahmeabschnitt wenigstens eine Erhebung (6) aufweist, die konfiguriert ist, um in die modulare Einheit (1) eingepasst angeordnet zu werden.

5. Versorgungsanordnung nach einem der Ansprüche 1 bis 4, wobei sie zusätzlich Kopplungsbereiche in dem Befestigungselement (2) und eine Abdeckung (7) mit zwei entgegengesetzten Längsenden aufweist, wobei die Abdeckung (7) fähig ist, mittels eines elastischen Eingriffs in den Kopplungsbereichen gekoppelt angeordnet zu werden.

6. Versorgungsanordnung nach Anspruch 5, wobei die Abdeckung (7) ein offenes Längsende und ein bedecktes Längsende hat, wobei das offene Längsende konfiguriert ist, um mit der modularen Einheit (1) gekoppelt zu werden.

7. Versorgungsanordnung nach Anspruch 5, wobei die Abdeckung (7) zwei offene Längsenden hat, wobei die zwei offenen Längsenden konfiguriert sind, um mit einer der modularen Einheiten (1) gekoppelt zu werden.

8. Versorgungsanordnung nach einem der Ansprüche 5 bis 7, wobei sie zusätzlich wenigstens eine Kerbe (17) und einen Zahn (18) aufweist, wobei der Zahn (18) fähig ist, wenigstens teilweise in der Kerbe (17) untergebracht angeordnet zu werden, um zumindest eine Vorbefestigung zwischen der Abdeckung (7) und der modularen Einheit (1) einzurichten.

9. Versorgungsanordnung nach einem der Ansprüche 5 bis 8, wobei sie zusätzlich wenigstens einen Vorsprung (8) und einen Hohlraum (9) aufweist, wobei der Vorsprung (8) und die Hohlräume (9) komplementär zueinander sind, um mittels elastischen Eingreifens eine Befestigung zwischen dem Befestigungselement (2) und der Abdeckung (7) einzurichten.

10. Versorgungsanordnung nach einem der Ansprüche 5 bis 9, wobei sie zusätzlich wenigstens eine Aussparung (10) und eine Rippe (11) aufweist, wobei die Rippe (11) fähig ist, derart untergebracht zu werden, dass sie in die Aussparung (10) passt, um mittels elastischen Eingreifens eine Kopplung zwischen dem Befestigungselement (2) und der Abdeckung (7) einzurichten.

## Revendications

1. Ensemble d'alimentation en puissance électrique et/ou en données pour l'agencement d'unités modulaires (1) sur des chemins de roulement (3), comprenant :
- un élément de fixation (2) configuré pour agencer l'unité modulaire (1) de manière à ce qu'elle soit fixée au chemin de roulement (3) ;
- deux surfaces de contact (5) pour que l'élément de fixation (2) établisse un contact sur le chemin de roulement (3) ;
- une partie de réception configurée pour agencer l'unité modulaire (1) de manière à ce qu'elle soit couplée dans l'élément de fixation (2) ;
- deux éléments en relief (12) pour s'enclencher dans le chemin de roulement (3), les éléments en relief (12) étant agencés en saillie en correspondance avec chacune des surfaces de contact (5) ; de sorte qu'une position de l'unité modulaire (1) sur le chemin de roulement (3) puisse être fixée au moyen de l'élément de fixation (2) ;
l'élément de fixation (2) comprenant deux parties, chacune des parties ayant une des surfaces de contact (5) et un des éléments en relief (12), et dans lequel les deux parties forment une seule pièce, les deux parties sont séparées l'une de l'autre par un canal (13) qui est configuré de sorte à avoir une largeur réductible, de sorte qu'il soit possible d'appliquer une pression sur le chemin de roulement (3) à travers les surfaces de contact (5) ;
dans lequel ledit ensemble d'alimentation comprend en outre des moyens d'application de pression sous la forme d'un arbre fileté et d'un trou traversant (14) correspondant s'étendant le long des deux parties, ledit trou traversant (14) ayant un filet complémentaire au filet de l'arbre fileté, et ledit trou traversant (14) passant à travers le canal (13) latéralement, de sorte que lorsque l'arbre fileté est enfilé dans le trou traversant (14), la largeur du canal (13) est configurée pour se réduire, ce qui déplace les deux parties, les surfaces de contact (5) et les éléments en relief (12) plus près les uns des autres, établissant une compression sur le chemin de roulement (3).

2. Ensemble d'alimentation selon la revendication 1, dans lequel l'élément de fixation (2) comprend un corps (4) et les deux parties sont sous la forme de deux brides (4'), de sorte que la partie de réception soit située dans le corps (4) et que chacune des surfaces de contact (5) soit située dans une bride correspondante des deux brides (4').

3. Ensemble d'alimentation selon la revendication 1 ou 2, dans lequel la partie de réception est définie conjointement par les deux parties.

4. Ensemble d'alimentation selon l'une quelconque des revendications 1 à 3, dans lequel la partie de réception comprend au moins une proéminence (6) configurée pour être agencée de manière ajustée dans l'unité modulaire (1).

5. Ensemble d'alimentation selon l'une quelconque des revendications 1 à 4, dans lequel il comprend en plus des zones de couplage dans l'élément de fixation (2) et un couvercle (7) avec deux extrémités longitudinales opposées, le couvercle (7) pouvant être agencé de manière à se coupler dans les zones de couplage par engagement élastique.

6. Ensemble d'alimentation selon la revendication 5, dans lequel le couvercle (7) a une extrémité longitudinale ouverte et une extrémité longitudinale couverte, l'extrémité longitudinale ouverte étant configurée pour être couplée à l'unité modulaire (1).

7. Ensemble d'alimentation selon la revendication 5, dans lequel le couvercle (7) a deux extrémités longitudinales ouvertes, les deux extrémités longitudinales ouvertes étant configurées pour être couplées à l'une des unités modulaires (1).

8. Ensemble d'alimentation selon l'une quelconque des revendications 5 à 7, dans lequel il comprend en plus au moins une encoche (17) et une dent (18), la dent (18) pouvant être agencée au moins partiellement logée dans ladite encoche (17) pour établir au moins une pré-attache entre le couvercle (7) et l'unité modulaire (1).

9. Ensemble d'alimentation selon l'une quelconque des revendications 5 à 8, dans lequel il comprend en plus au moins une protubérance (8) et une cavité (9), la protubérance (8) et les cavités (9) étant complémentaires l'une de l'autre pour établir une attache entre l'élément de fixation (2) et le couvercle (7) par engagement élastique.

10. Ensemble d'alimentation selon l'une quelconque des revendications 5 à 9, dans lequel il comprend en plus au moins un évidement (10) et une nervure (11), la nervure (11) pouvant être logée de manière à ce qu'elle soit ajustée dans l'évidement (10) pour établir un couplage entre l'élément de fixation (2) et le couvercle (7) par engagement élastique.
